# NOUVEAU FASCICULE DE BREVET EUROPEEN

(11) **EP 2 425 516 B2**
(45) Date de publication et mention de la décision concernant l'opposition: **18.09.2019**
(45) Mention de la délivrance du brevet: 23.12.2015
(21) Numéro de dépôt: 10727054.8
(22) Date de dépôt: 28.04.2010
(51) Int. Cl.: H02J 7/02, H02J 50/10, G07C 9/00

(54) **SYSTÈME D'ALIMENTATION EXTERNE D'UNE SERRURE COMPORTANT DES MOYENS DE COMMUNICATION SANS CONTACT DE TYPE NFC**
EXTERNES STROMVERSORGUNGSSYSTEM FÜR EINEN RIEGEL MIT KONTAKTLOSEN KOMMUNIKATIONSMITTELN DES NFC-TYPS
EXTERNAL POWER SUPPLY SYSTEM FOR A LOCK COMPRISING NFC-TYPE CONTACTLESS COMMUNICATION MEANS

(30) Priorité: 30.04.2009 FR 0952855
(43) Date de publication de la demande: 07.03.2012
(73) Titulaire: ASSA ABLOY AB, 111 64 Stockholm (SE)
(72) Inventeur: Metivier, Pascal, 78810 Feucherolles (FR)
(74) Mandataire: Kramer Barske Schmidtchen Patentanwälte PartG mbB
(86) Numéro de dépôt international: PCT/FR2010/050806
(87) Numéro de publication internationale: WO 2010/125306

(56) Documents cités:
- EP-A2- 0 877 331
- WO-A-2006/077418
- WO-A-2007/126375
- WO-A-2009/094683
- WO-A1-2006/095186
- WO-A1-2006/101614
- WO-A2-2005/041385
- WO-A2-2008/107178
- DE-A1- 10 348 569
- DE-A1-102004 039 651
- FR-A- 2 839 833
- KR-A- 20080 050 089
- US-A1- 2008 224 825
- US-B2- 7 375 616

## Description

L'invention concerne les serrures commandées au moyen d'un objet portatif formant clef, coopérant avec la serrure par un couplage mutuel non galvanique de type NFC (communication en champ proche).

Cet objet portatif est plus particulièrement un téléphone portable équipé d'une puce NFC et d'une antenne NFC, la carte SIM étant utilisée comme élément de sécurité.

La serrure comporte à cet effet une bobine d'induction formant antenne, excitée par un signal alternatif de façon à produire dans l'espace environnant un champ magnétique variable, détectable sur une portée de quelques centimètres au plus. Ce champ est capté par l'antenne NFC du téléphone, qui en réponse module une charge variable. Cette variation, codée par diverses données issues du téléphone (identifiant, clef de cryptage, etc.) est détectée à son tour par la serrure, ce qui permet d'établir la communication bidirectionnelle recherchée.

Pour réaliser ces fonctions, les serrures comportent des circuits électroniques d'émission/réception et de calcul numérique, ainsi que des circuits électriques pour la commande des organes mécaniques de verrouillage/ déverrouillage.

Ces divers circuits ont besoin d'être alimentés en énergie électrique pour fonctionner, et la serrure comporte à cet effet une batterie intégrée, rechargeable ou échangeable.

Une difficulté survient lorsque cette batterie est déchargée ou si elle n'offre qu'une charge trop faible pour une opération standard : dans la mesure où la serrure ne peut plus alimenter la bobine d'induction, il n'est plus possible d'établir une communication sans contact avec l'extérieur et donc de reconnaître le téléphone portable. D'autre part, les organes mécaniques de la serrure ne peuvent plus être commandés, et la serrure reste donc bloquée. On note le document KR 2008 0050089 A (LG ELECTRONICS INC) du 5 juin 2008 qui décrit un appareil de commande de fermeture et ouverture de verrou de porte à l'aide d'un téléphone portable muni d'un RFiD selon le préambule des revendications indépendantes.

Une première solution consiste à prévoir un point d'alimentation électrique de secours sur la serrure, où l'on puisse connecter temporairement depuis l'extérieur une batterie de secours spécifique permettant de pallier la défaillance de la batterie interne, le temps de procéder à l'ouverture de la porte et démonter ensuite le boîtier de la serrure pour changer la batterie. Le but de la présente invention est de proposer une autre solution pour alimenter la serrure depuis l'extérieur en cas de défaillance de la batterie interne, ceci sans recours à un connecteur électrique, et sans qu'il soit nécessaire de disposer d'une batterie de secours externe spécifique.

Le principe de l'invention consiste à utiliser le téléphone portable comme source d'alimentation pour téléalimenter la serrure, c'est-à-dire lui transmettre de l'énergie par voie non galvanique via les circuits NFC.

Pour cela, le mode de fonctionnement du téléphone est inversé :
- en temps normal, la serrure est active, en mode dit "mode lecteur" et le téléphone est passif, en mode dit " mode émulation de carte " (le téléphone émule le fonctionnement d'une carte à puce sans contact). La serrure opère en émission NFC afin de téléalimenter et interroger les circuits NFC du téléphone ; après établissement du couplage, elle lit l'identifiant et/ou les données mémorisés dans le téléphone et autorise ou non l'ouverture de la porte.
- en cas de défaillance de la batterie interne, la serrure ne peut plus produire de champ magnétique, faute d'énergie suffisante. Le téléphone est alors basculé en "mode lecteur", c'est-à-dire en émission NFC : c'est lui qui va alors transmettre à la serrure de l'énergie par téléalimentation. Cette énergie, prélevée sur la batterie du téléphone, suffira à charger un condensateur tampon pour ensuite alimenter temporairement les circuits de la serrure le temps nécessaire pour que cette dernière vérifie l'habilitation du porteur du téléphone et commande l'ouverture de la porte.

L'invention est défini par les caractéristiques des revendications independantes. Les modes de realisations sont définis par les revendications dépendantes.

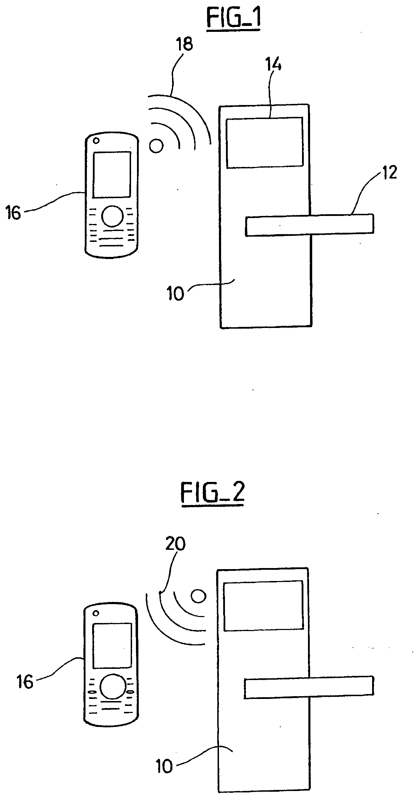

Un exemple de mise en oeuvre de l'invention est donné en référence aux Figures 1 et 2. Sur ces figures, la référence 10 désigne la serrure, qui se présente extérieurement sous forme d'un élément monobloc ne laissant paraître qu'une poignée 12 et une zone cible 14 pour la communication NFC, zone contre laquelle devra être présenté un objet portatif faisant fonction de clef, en l'espèce un téléphone portable 16 muni de circuits lui permettant de fonctionner en mode NFC.

En variante, le dispositif peut être constitué d'un cylindre électrique intégrable à une serrure préexistante, ce cylindre comportant les divers circuits électriques et électroniques nécessaires.

En temps normal, la serrure 10 opère en "mode lecteur" et le téléphone 16 en "mode d'émulation de carte". La serrure produit un champ magnétique alternatif détecté par le téléphone qui, en réponse, module une charge ; la variation résultante du champ magnétique est détectée par la serrure, ce qui permet d'établir le couplage et la communication bidirectionnelle avec le téléphone 16. La serrure peut alors interroger le téléphone (selon des techniques connues), lire les identifiants, codes, données, autorisations, etc., stockés dans celui-ci, vérifier ces paramètres et, s'ils sont conformes, commander un moteur de déverrouillage des organes mécaniques de la serrure.

Si la batterie interne de la serrure 10 est défaillante, cette dernière ne peut plus produire de champ magnétique.

L'absence de champ magnétique, ou un champ d'intensité insuffisante, peut être aisément détectée par le téléphone à l'approche de la zone cible 14. Dans ce cas, le téléphone est basculé du "mode émulation de carte" vers le "mode lecteur". Cette situation est celle illustrée Figure 1 : c'est le téléphone 16 qui génère alors un champ magnétique, schématisé en 18, en direction de la zone cible 14 de la serrure 10.

Ce champ, capté par la serrure, sera suffisant pour charger un condensateur tampon prévu à l'intérieur de celle-ci. Sur l'écran du téléphone 16, un indicateur graphique indique à l'utilisateur la quantité d'énergie restant à envoyer à la serrure pour pouvoir rétablir son fonctionnement.

Une fois atteint le niveau d'énergie requis, la serrure est replacée dans son "mode lecteur" normal. Cette situation est illustrée Figure 2. La serrure 10 va alors produire le champ magnétique d'interrogation du téléphone, schématisé en 20, et engager le processus normal de vérification des données mémorisées dans le téléphone 16, qui aura été entretemps basculé dans son "mode émulation de carte" normal d'interrogation. Dans une variante, l'invention peut être mise en oeuvre avec une serrure dépourvue de batterie d'alimentation. Les mêmes principes s'appliquent, à la seule différence que le téléphone est systématiquement mis en "mode lecteur" dès qu'il est approché de la zone cible, sans qu'il soit besoin de détecter la présence ou non d'un champ magnétique, puisque la serrure est dépourvue de moyens d'alimentation propres.

## Revendications

1. Un système comprenant :
- une serrure (10) munie de circuits électroniques d'émission/réception par voie de communication en champ proche NFC et de circuits électriques pour la commande d'organes mécaniques de verrouillage/déverrouillage, et d'une zone cible (14) pour la communication NFC, et
- un téléphone portable (16) muni de circuits lui permettant de fonctionner en mode NFC, système **caractérisé en ce qu'**il comprend des moyens pour transmettre de l'énergie à la serrure par téléalimentation (18) depuis le téléphone, de manière à charger un condensateur tampon pour ensuite alimenter temporairement les circuits électroniques et électriques de la serrure le temps que cette dernière interroge les circuits NFC du téléphone afin de vérifier l'habilitation du porteur du téléphone et commander l'ouverture d'une porte et comprenant des moyens pour passer d'une première configuration, où la serrure est en mode dit "mode lecteur" et le téléphone est en mode dit "mode émulation de carte", à une seconde configuration, où le téléphone est basculé en "mode lecteur" de manière à transmettre à la serrure de l'énergie par téléalimentation pour charger ledit condensateur tampon.

2. Le système de la revendication 1, comprenant des moyens pour replacer la serrure en "mode lecteur" une fois atteint un niveau d'énergie requis et pour basculer entretemps le téléphone en "mode émulation de carte", de manière à permettre à la serrure d'engager ensuite un processus de vérification de données mémorisées dans le téléphone.

3. Un système comprenant :
- une serrure (10) munie de circuits électroniques d'émission/réception par voie de communication en champ proche NFC et de circuits électriques pour la commande d'organes mécaniques de verrouillage/déverrouillage, et d'une zone cible (14) pour la communication NFC, et
- un téléphone portable (16) muni de circuits lui permettant de fonctionner en mode NFC, système comprenant des moyens pour transmettre de l'énergie à la serrure par téléalimentation (18) depuis le téléphone, de manière à charger un condensateur tampon pour ensuite alimenter temporairement les circuits électroniques et électriques de la serrure le temps que cette dernière interroge les circuits NFC du téléphone afin de vérifier l'habilitation du porteur du téléphone et commander l'ouverture d'une porte, la serrure étant dépourvue de batterie d'alimentation, et le telephone étant systématiquement basculé en "mode lecteur" à l'approche de la zone cible de la serrure,
système **caractérisé en ce qu'**il comprend en outre des moyens pour placer la serrure en "mode lecteur" une fois atteint un niveau d'énergie requis pour alimenter temporairement les circuits électroniques et électriques de la serrure le temps que cette dernière interroge les circuits NFC du téléphone afin de vérifier l'habilitation du porteur du téléphone et commander l'ouverture d'une porte, et pour basculer entretemps le téléphone en "mode émulation de carte", de manière à permettre à la serrure d'engager ensuite un processus de vérification de données mémorisées dans le téléphone.

## Patentansprüche

1. System, das enthält:
- ein Schloss (10), das mit elektronischen Sende-/Empfangsschaltungen über einen Nahfeld-Kommunikationskanal NFC und elektrischen Schaltungen zur Steuerung von mechanischen Verriegelungs-/Entriegelungsorganen und mit einem Zielbereich (14) für die NFC-Kommunikation versehen ist, und
- ein Mobiltelefon (16), das mit Schaltungen versehen ist, die es ihm ermöglichen, im NFC-Modus zu arbeiten,
wobei das System **dadurch gekennzeichnet ist, dass** es Einrichtungen enthält, um durch Fernversorgung (18) Energie vom Telefon an das Schloss zu übertragen, um einen Pufferkondensator zu laden, um anschließend vorübergehend die elektronischen und elektrischen Schaltungen des Schlosses für die Zeit zu versorgen, in der dieses die NFC-Schaltungen des Telefons abfragt, um die Berechtigung des Trägers des Telefons zu überprüfen und die Öffnung einer Tür zu steuern, und Einrichtungen enthält, um von einer ersten Konfiguration, in der das Schloss im so genannten "Lesemodus" und das Telefon im so genannten "Kartenemulationsmodus" ist, in eine zweite Konfiguration überzugehen, in der das Telefon in den "Lesemodus" umgeschaltet wird, um durch Fernversorgung Energie an das Schloss zu übertragen, um den Pufferkondensator zu laden.

2. System nach Anspruch 1, das Einrichtungen enthält, um das Schloss in den "Lesemodus" zurückzuversetzen, wenn ein erforderlicher Energiepegel erreicht ist, und zwischenzeitlich das Telefon in den "Kartenemulationsmodus" umzuschalten, um es dem Schloss zu ermöglichen, anschließend einen Überprüfungsvorgang von im Telefon gespeicherten Daten einzuleiten.

3. System, das enthält:
- ein Schloss (10), das mit elektronischen Sende-/Empfangsschaltungen über einen Nahfeld-Kommunikationskanal NFC und elektrischen Schaltungen zur Steuerung von mechanischen Verriegelungs-/Entriegelungsorganen und mit einem Zielbereich (14) für die NFC-Kommunikation versehen ist, und
- ein Mobiltelefon (16), das mit Schaltungen versehen ist, die es ihm ermöglichen, im NFC-Modus zu arbeiten,
wobei das System Einrichtungen enthält, um durch Fernversorgung (18) Energie vom Telefon an das Schloss zu übertragen, um einen Pufferkondensator zu laden, um anschließend vorübergehend die elektronischen und elektrischen Schaltungen des Schlosses für die Zeit zu versorgen, in der dieses die NFC-Schaltungen des Telefons abfragt, um die Berechtigung des Trägers des Telefons zu überprüfen und die Öffnung einer Tür zu steuern, wobei das Schloss keine Versorgungsbatterie enthält und das Telefon bei der Annäherung an den Zielbereich des Schlosses systematisch in den "Lesemodus" umgeschaltet wird,
wobei das System **dadurch gekennzeichnet ist, dass** es ferner Einrichtungen zum Versetzen des Schlosses in den "Lesemodus", sobald ein zur vorübergehenden Versorgung der elektronischen und elektrischen Schaltungen des Schlosses für die Zeit, die letzteres zum Abfragen der NFC-Schaltungen des Telefons zum Prüfen der Berechtigung des Trägers des Telefons und Steuern des Öffnens einer Tür benötigt, erforderlicher Energiepegel erreicht ist, und zum Schalten des Telefons in der Zwischenzeit zu dem "Kartenemulationsmodus" zum Ermöglichen, dass das Schloss anschließend einen Überprüfungsvorgang von in dem Telefon gespeicherten Daten durchführt, aufweist.

## Claims

1. System comprising:
- a lock (10) provided with near field communication NFC transmission/reception electronic circuits and electrical circuits for controlling mechanical locking/unlocking members, and a target zone (14) for the NFC communication, and
- a mobile telephone (16) provided with circuits enabling it to operate in NFC mode,
the system being **characterized in that** it comprises means for transmitting energy to the lock by remote power feed (18) from the telephone, so as to charge a buffer capacitor to then temporarily power the electronic and electrical circuits of the lock for the time it takes the latter to interrogate the NFC circuits of the telephone in order to check the accreditation of the carrier of the telephone and control the opening of a door, and comprising means for switching from a first configuration, in which the lock is in so-called "reader mode" and the telephone is in so-called "card emulation mode", to a second configuration, in which the telephone is switched to "reader mode" so as to transmit energy to the lock by remote power feed to charge said buffer capacitor.

2. System according to Claim 1, comprising means for replacing the lock in "reader mode" once a required energy level is reached and to switch the telephone in the meantime to "card emulation mode" so as to allow the lock to then engage a data checking process, which data are stored in the telephone.

3. System comprising:
- a lock (10) provided with near field communication NFC transmission/reception electronic circuits and electrical circuits for controlling mechanical locking/unlocking members, and a target zone (14) for the NFC communication, and
- a mobile telephone (16) provided with circuits enabling it to operate in NFC mode,
the system comprising means for transmitting energy to the lock by remote power feed (18) from the telephone, so as to charge a buffer capacitor to then temporarily power the electronic and electrical circuits of the lock for the time it takes the latter to interrogate the NFC circuits of the telephone in order to check the accreditation of the carrier of the telephone and control the opening of a door, the lock having no power supply battery, and the telephone being systematically switched to "reader mode" on approaching the target zone of the lock,
the system being **characterized in that** it further comprises means for placing the lock in "reader mode" once an energy level required to temporarily power the electronic and electrical circuits of the lock for the time it takes the latter to interrogate the NFC circuits of the telephone in order to check the accreditation of the carrier of the telephone and control the opening of a door is reached, and for switching the telephone in the meantime to "card emulation mode" so as to allow the lock to then engage a data checking process, which data are stored in the telephone.
